Europäisches Patentamt

European Patent Office

Office européen des brevets

(11) Publication number : **0 491 484 A1**

# (12) EUROPEAN PATENT APPLICATION

(21) Application number : **91311169.6**

(22) Date of filing : **02.12.91**

(51) Int. Cl.[5] : **B25B 23/04, B23P 19/00**

(30) Priority : **15.12.90 JP 417721/90**
**21.09.91 JP 315579/91**

(43) Date of publication of application :
**24.06.92 Bulletin 92/26**

(84) Designated Contracting States :
**DE GB IT SE**

(71) Applicant : **Aoyama, Yoshitaka**
**20-11, Makitsukadai 2-cho**
**Sakai-shi, Osaka 590-01 (JP)**

(72) Inventor : **Aoyama, Yoshitaka**
**20-11, Makitsukadai 2-cho**
**Sakai-shi, Osaka 590-01 (JP)**

(74) Representative : **Tillbrook, Christopher John**
**Chris J Tillbrook & Co 5 Old Rectory Close**
**Churchover**
**Rugby, Warwickshire CV23 0EN (GB)**

(54) Method and apparatus for feeding and tightening fastener parts.

(57) A fastener part, such as a bolt or nut, is magnetically held at the front end of a feed rod 5 and automatically fed to an intended place and tightened. A holding member 25 is kept standing by at the end of a parts feeding pipe 18 and the part held is moved to a place where it is coaxial with the feed rod 5. The parts feeding pipe 18 and the holding member 25 are integrally retracted at a first step to engage the part with an engaging hole 6 in the front end of the feed rod 5. After the holding member is retracted, the parts feeding pipe 18 and the holding member 25 are retracted at a second step until the front end of the feed rod 5 holding the part projects. In this state, the whole assembly is advanced to feed the part to the intended place and tighten it. Alternatively, after the whole assembly is advanced close to the intended place, the coaxial positioning between the part and the feed rod 5 and the retraction of the holding member are effected in the same manner as described above.

FIG.1

# BACKGROUND OF THE INVENTION

## Field of the Invention

This invention relates to the feeding of fastener parts (hereinafter referred to simply as parts), such as bolts and nuts, to a predetermined location and tightening them, intended to automate a nut runner or bolt tightener in common use to provide an automatic machine capable of automatically performing procedures ranging from the feeding of part to the tightening thereof.

## Prior Art

As for prior art, mention may be made of "Bolt Tightening Device" disclosed in Japanese Patent Application Laid-Open No. 208876/1987. This device is a combination of a feed rod and a U-shaped parts feeding pipe, designed such that a bolt makes a U-turn in the parts feeding pipe and is held at the front end of the feed rod, whereupon the parts feeding pipe is retracted, resulting in the feed rod alone taking the projecting position. However, since the bolt has to make a U-turn, there has been the danger of the bolt being caught in the parts feeding pipe. Further, since the device is designed such that the bolt conveyed thereto contacts the front end of the feed rod by inertial force, another problem in addition to said first one of being caught is that the bolt does not always reach the front end of the feed rod.

# SUMMARY OF THE INVENTION

This invention is intended to solve these prior art problems described above, and a first form of the parts feeding and tightening method of this invention comprises the steps of holding a retractable holding member standing by at the end of a parts feeding passage ready to receive and hold a part conveyed thereto through the parts feeding passage, moving the holding member until the part held thereby becomes coaxial with the retractable feed rod, advancing the feed rod to allow the part to engage an engaging hole in the front end thereof and substantially concurrently therewith retracting the holding member, retracting the holding member and parts feeding passage relative to the feed rod to cause the front end of the feed rod holding the part to project, and advancing the whole assembly with the front end of the feed rod held in the projecting state so as to feed the part to an intended place and tighten it.

A second form of the parts feeding and tightening method according to this invention comprises the steps of holding a retractable holding member standing by at the end of a parts feeding passage ready to receive and hold a part conveyed thereto through the parts feeding passage, moving the holding member until the part held thereby becomes coaxial with the retractable feed rod, retracting the holding member and parts feeding passage relative to the feed rod to cause the part to engage an engaging hole in the front end of the feed rod, retracting the holding member, subsequently retracting the holding member and parts feeding passage relative to the feed rod to cause the feed rod holding the part to project, and advancing the whole assembly with the front end of the feed rod held in the projecting state so as to feed the part to an intended place and tighten it. In essence, the first retraction of the holding member and parts feeding passage causes the feed rod to engage the part, and the second retraction of the holding member and parts feeding passage causes the feed rod to project, and with the feed rod alone, holding the part at its front end, being held in the projecting state, the whole assembly is advanced to an intended place; therefore, even if such intended place, which is the desitination of the part, is narrow, the tightening of the part can be automatically effected.

A third form of the parts feeding and tightening method according to this invention comprises the steps of holding a retractable holding member standing by at the end of a parts feeding passage ready to receive and hold a part conveyed thereto through the parts feeding passage, advancing the holding member and parts feeding passage until they are stopped close to an intended place, moving the holding member until the part held thereby becomes coaxial with the retractable feed rod, retracting the holding member and parts feeding passage relative to the feed rod to cause the part to engage an engaging hole in the front end of the feed rod, retracting the holding member, subsequently retracting the holding member and parts feeding passage relative to the feed rod to cause the feed rod holding the part to project, and advancing the whole assembly with the front end of the feed rod held in the projecting state so as to feed the part to the intended place and tighten it. As a fourth form of the parts feeding and tightening method according to this invention, it is possible to keep the part held by the holding member substantially restrained in the radial direction by an auxiliary member.

A first form of the parts feeding and tightening apparatus according to this invention comprises a rotative retractable feed rod having an engaging hole at the front end thereof to receive a part, a parts feeding pipe having a parts feeding passage at its end adjacent the front end of the feed rod, a retractable holding member extending substantially orthogonally to the advancing and retracting axis of the feed rod and capable of advancing and retracting away from said open end, and driving means for retracting the holding member and parts feeding rod relative to the feed rod.

As a second form of the parts feeding and tightening apparatus according to this invention, means for holding a part may be applied to the front end of the holding member.

As a third form of the parts feeding and tightening apparatus of according to this invention, the holding member has a substantially U-shaped groove for receiving a part, while a retractable auxiliary member may be attached to the open side of said groove, whereby a part is firmly held during conveyance thereof. That is, since the part is in the substantially restrained state by the holding member and the auxiliary member, the part never rotates with the feed rod even if the rotatable feed rod contacts the part; thus, the fitting into the engaging hole of the feed rod is reliably attained in a short time.

According to this invention, since the part is held by the holding member and conveyed to the position where it is coaxial with the feed rod, the parts feeding pipe is either straight or even if it is curved, its degree of curve is necessarily so low that the part is no longer required to make a U-turn as in the prior art; thus, the movement of parts can be made smooth and reliable. With the holding member and parts feeding pipe retracted relative to the feed rod, it is only the feed rod that is projecting, so that even if a part is to be inserted in a narrow place, it can be fed and tightened without any trouble. Since it is arranged that the holding member and parts feeding pipe are integrally retracted in two steps, a first one and a second one, its arrangement is very advantageous to simplification of movement. When the part is carried in, it is first received by the holding member and then the holding member itself or its cooperation with the auxiliary member maintains the stability of the part held by the holding member during conveyance of the part; thus, accurate feeding of parts can be attained without any danger of the part accidentally dropping or being deviated. Since the time for moving the part until it is coaxial with the feed rod can be optionally selected, it is possible to obtain an operation most suitable to the emvironment where the apparatus is used.

BRIEF DESCRIPTION OF THE DRAWINGS

Fig. 1 is an elevational view, partly in section, of a parts feeding and tightening apparatus, showing an embodiment of this invention;
Fig. 2 is a sectional view taken along the line 2-2 in Fig. 1;
Fig. 3 is a sectional view taken along the line 3-3 in Fig. 1;
Fig. 4 is a sectional view taken along the line 4-4 in Fig. 1;
Fig. 5 is a longitudinal sectional view of a parts feeding pipe, showing a modified example;
Fig. 6 is a longitudinal sectional view, showing a modified example of the holding member;
Fig. 7 is a plan view, showing another modified example of the holding member;

Fig. 8 is a longitudinal sectional view, showing another modified example of the holding member;
Fig. 9 is a sectional view taken along the line 9-9 in Fig. 8;
Fig. 10 is a longitudinal sectional view, showing a modified example in which flanged nuts are handled; and
Fig. 11 is a plan view of the holding member used in Fig. 10.

DESCRIPTION OF THE PREFERRED EMBODIMENTS

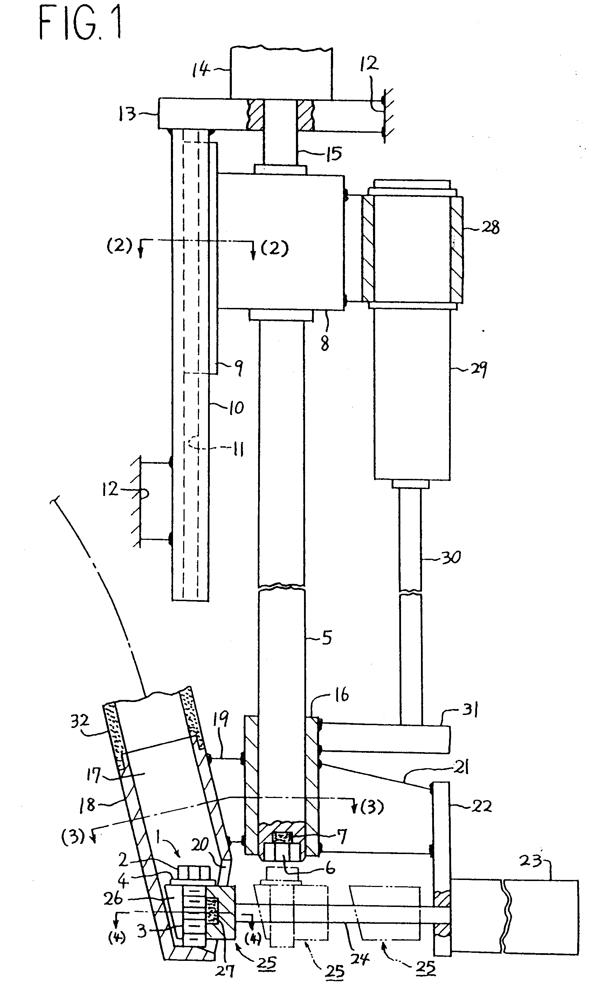

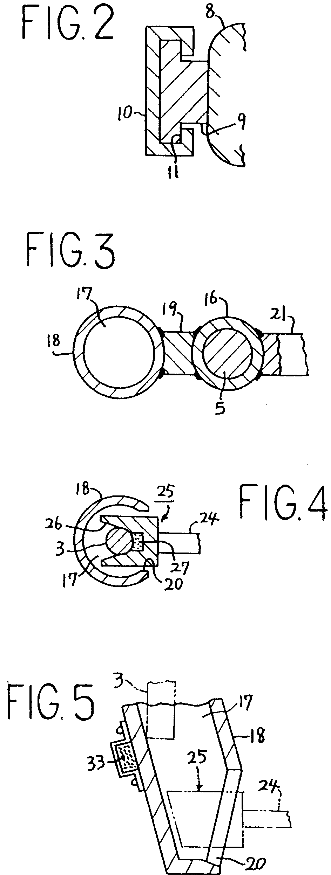

An embodiment using hexagon headed bolts as objects to be handled will first be described with reference to Figs. 1 through 4. The reference numeral 2 denotes a hexagonal head portion; 3 denotes a stem portion; and 4 denotes a flange. As shown in Fig. 1, a rotative advance and retraction type feed rod 5, which performs rotative movement and advance and retraction movement, has a downwardly directed engaging hole 6 at its front end for receiving the head portion 2 of a bolt 1. The shape of the engaging hole 6 is preferably 12-sided or 24-sided rather than 6-sided in the sense that it can receive the head portion 2 of the bolt 1 more smoothly. A magnet (permanent magnet) 7 is embedded in the innermost region of the engaging hole 6, so that the attractive magnetic force thereof prevents the bolt 1 received in the engaging hole 6 from slipping off. In addition, although the feed rod 5 is shown extending vertically downward. it will be readily understood that the feed rod 5 may extend upward, obliquely or horizontally.

The feed rod 5 is joined at its one end to a rotative motor 8 for rotative driving purposes. As this rotative motor, use may be made of a pneumatic motor, hydraulic motor, electric motor or any other suitable type of motor. The rotative motor 8 is capable of sliding along a guide rail 10 through a slide element 9. That is, as is clear from Fig. 2, the guide rail 10 is formed with a dovetail groove 11, in which the slide element 9 fixed to the motor 8 is fitted. The guide rail 10 is disposed parallel with the feed rod 5 and welded at its one end to a fixed element 13 attached to a stationary member 12. The fixed element 13 has an air cylinder 14 for advancing and retracting the feed rod 5, with the piston rod 15 thereof being joined to the rotative motor 8.

The feed rod 5 snugly slidably extends through a guide sleeve 16, said guide sleeve 16 having integrally joined thereto a parts feeding pipe 18 having a parts feeding passage 17.

In this case, the guide sleeve 16 and parts feeding pipe 18 are shown integrated together through a bracket 19(Figs. 1 and 3). The parts feeding pipe 18 has its axis disposed at an acute angle with respect to the axis of the feed rod 5, and its lower end is positioned somewhat below the level of the guide sleeve 16 and is formed with an opening 20 on the side associated with the feed rod 15.

Another bracket 21 is welded to the guide sleeve 16 on the side opposite to the bracket 19 and a fixed plate 22 is welded to said bracket 21. An air cylinder 23 is fixed to the fixed plate 22, with its piston rod 24 having a holding member 25 welded to the front end thereof. The holding member 25, as is clear from Figs. 1 and 4, is made by processing a substantially rectangular parallelopiped, having a substantially U-shaped vertically extending groove 26 for receiving the head portion 3 of a bolt 1, the bottom ot said U-shaped groove having a magnet (permanent magnet) 27 embedded therein to serve as means for holding the part. The piston rod 24, as shown in solid lines, is disposed such that it is orthogonal to the axis of the feed rod 5 and such that when the piston rod 24 is extended, the holding member 25 enters the opening in the feed rod 5. Therefore, the holding member 25 is standing by waiting for the dropping of the bolt 1 which has entered the lower end of the parts feeding pipe 18, as shown in Fig. 1. The air cylinder 23 is stepwise controlled to take three positions: a standby position with the holding member 25 shown in solid lines in Fig. 1, an aligned position where a bolt 1 is coaxial with the feed rod 5 as shown in phantom lines, and a retracted position associated with advance movement of the feed rod 5.

Firmly fixed to the rotative motor 8 through a bracket 28 is an air cylinder 29 having a piston rod 30 joined to an arm member 31 welded to the guide sleeve 16. As a result, when the piston rod 30 is retracted, the guide sleeve 16 slides upward with respect to the feed rod 5 and concurrently therewith the parts feeding pipe 18 and air cylinder 23 integrally move upward, with the feed rod 5 alone remaining relatively projecting. This series of mechanisms form the driving means. The air cylinder 29 is controlled to perform two motions; a first step motion in which the piston rod 30 is retracted through a relatively short stroke from the state shown in Fig. 1, and a second step motion in which it is retracted through a relatively long stroke. In addition, connected to the parts feeding pipe 18 is a feed hose 32 of pliable synthetic resin connected to a parts feeder (not shown).

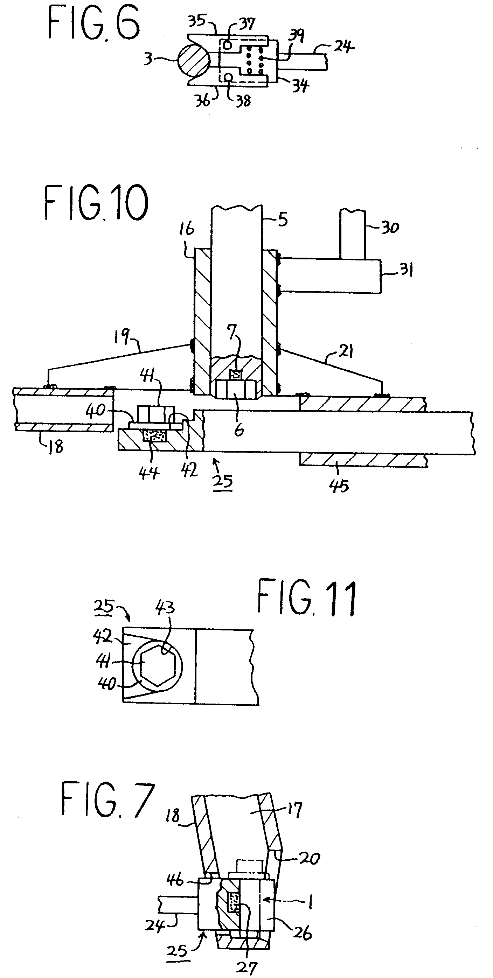

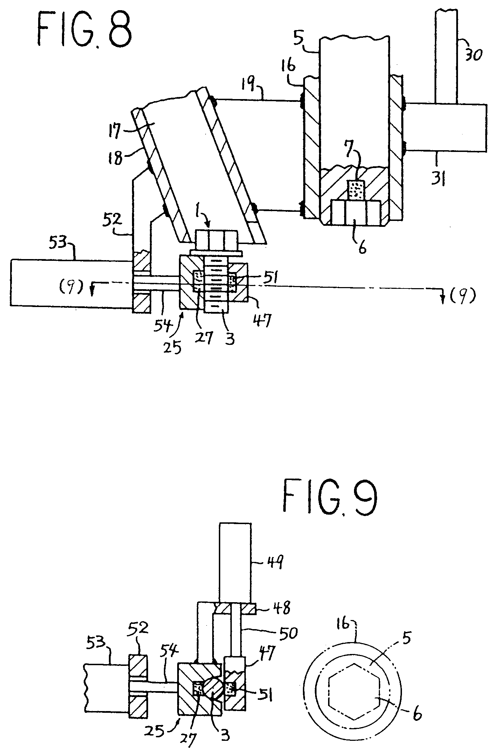

To ensure that the attractive magnetic forces of the magnets 7 and 27 act more strongly on the bolt 1, it is recommended that the feed rod 5, parts feeding pipe 18 and holding member 25 be made of stainless steel, which is a nonmagnetic material. It is possible to dispense with the magnet 7 as shown by making the feed 5 of iron and extending it through an exciting coil (not shown). Further, as shown in Fig. 5, another magnet 33 is attached to the parts feeding pipe 18, thereby making it possible to guide the stem portion 3 of the bolt 1 while sliding it along the left-hand side inner wall surface of the parts feeding pipe 18 and to guide the stem portion 3 smoothly into the groove 26 of the holding member.

The operation of this embodiment will now be described. In addition, the operation sequence to be later referred to can be easily embodied by those skilled in the art having ordinary knowledge in the field to which this invention belongs; therefore, a detailed description thereof is omitted.

When the bolt 1 descends through the parts feeding passage 17 with the holding member 25 held in the standby position shown in solid lines in Fig. 1, the stem portion 3 energetically enters the groove 26 and concurrently therewith it is magnetically held by the magnet 27. Then, the piston rod 29 is retracted by an amount corresponding to a constant stroke to move the holding member 25 to the aligned position, whereupon the air cylinder 29 effects the short stroke at the first step, whereby the head portion 2 fits in the engaging hole of the rotating feed rod 5. Then, the air cylinder 29 effects the long stroke at the second step to pull up the guide sleeve 16, leaving the feed rod 5 alone projecting. In addition, it is arranged that when the parts feeding pipe 18 is pulled up, the feed hose 32 is arcuately flexed so as not to spoil the function of the passage. Thereafter, the piston rod 15 of the air cylinder 14 is advanced to integrally lower the rotative motor 8 and feed rod 5 until the stem portion 3 of the bolt 1 magnetically attractively held at the front end of the feed rod 5 reaches a mating threaded hole (not shown). Further, as the bolt is rotatively forced into the threaded hole, the threaded portion 3 is screwed into the threaded hole; in this manner, the feeding and tightening are completed.

The bolt 1 is engaged with the feed rod 5 in an early period, as described above; however, it is also possible to effect this engagement in a later period. That is, in the state of Fig. 1 where the holding member 25 holds the bolt 1 at the end of the parts feeding passage 17, and without changing the relative positions of the feed rod 5 and guide sleeve 16, the entire apparatus is advanced close to the intended position by the air cylinder 14 and then stopped. And then the holding member 25 is moved until the bolt 1 and feed rod 5 are coaxial with each other. The subsequent operation is the same as described above.

Fig. 6 shows a modified example in which the holding member 25 is embodied as one of chuck construction, comprising a base plate 34 fixed to the front end of the piston rod 24, a pair of jaws 35 and 36 rotatably mounted on said base plate by pivot shafts 37 and 38, a coil spring 39 interposed between the rear ends of said jaws 35 and 36 so as to elastically clamp the stem portion 3 of the bolt 1 between the front ends.

Fig. 7 shows a modified example in which the direction of advance of the holding member 25 to the opening 20 in the parts feeding pipe 18 is opposite to that shown in Fig 1, the example including a passage hole 46 formed opposite to the opening 20 in the parts feeding pipe 18 to allow the holding member 25 to be advanced therethrough. The bolt 1 received in the groove 26 of the holding member 25 is held by the magnet 27 and in this state it is pushed to the right to take the aforesaid position and then it is returned to the illustrated retracted position (which, in this case, is also the standby position). In addition, what corresponds to the air cylinder 23 is not shown, but a bracket may be extended to the left from the parts feeding pipe 18 and such air cylinder may be attached thereto.

Figs. 8 and 9 show a modified example in which an auxiliary member 47 adapted to open and close the groove 26 of the holding member 25 is installed. As is clear from Fig. 9, a bracket 48 is welded to the lateral surface of the holding member 25 and an air cylinder 49 is fixed thereto, with an auxiliary member 47 joined to the piston rod 50 thereof. A magnet 51 may be attached to said auxiliary member 47. When the stem portion 3 of the bolt 1 is fitted in the groove 26 with the auxiliary member 47 closing the groove 26, the stem portion 3 is substantially radially restrained. In addition, in Fig. 8, a bracket 52 is welded to the parts feeding pipe 18, with an air cylinder 53 fixed thereto, and a holding member 25 is joined to the piston rod 54 thereof. Further, illustration of a hose to be connected to each air cylinder is omitted, and the operating sequence can be easily embodied by using an ordinary air control valve.

Figs. 10 and 11 show a modified example applicable when the part to be handled is a nut 41 having a flange 40, it being arranged that the nut 41 coming in through a substantially horizontally positioned parts feeding pipe 18 is transferred to a holding member 25 standing by. A step portion or recess 42 is formed in the front end of the holding member 25 for receiving the flange 40 of the nut 41, the level of the surface of said recess 42 being equal to or slightly lower than the level of the parts transferring surface of the parts feeding pipe 18. The peripheral wall of the recess 42 includes a divergent nozzle having a divergent inlet side for guiding the flange 40 in advancing, and an arcuate portion 43 (Fig. 10) contacting the circular flange 40 to position the latter. A magnet (permanent magnet) 40 corresponding to the described magnet (27) is embedded in the recess 42. The parts feeding pipe 18 is welded to the guide sleeve 16 through a bracket 21. The rest of the arrangement and operation is substantially the same as that described in connection with Fig. 1 and can be easily understood; thus, a detailed description thereof is omitted.

## Claims

1. A parts feeding and tightening method comprising the steps of holding a retractable holding member standing by at the end of a parts feeding passage ready to receive and hold a part conveyed thereto through the parts feeding passage, moving the holding member until the part held thereby becomes coaxial with the retractable feed rod, advancing the feed rod to allow the part to engage an engaging hole in the front end thereof and substantially concurrently therewith retracting the holding member, retracting the holding member and parts feeding passage relative to the feed rod to cause the front end of the feed rod holding the part to project, and advancing the whole assembly with the front end of the feed rod held in the projecting state so as to feed the part to an intended place and tighten it.

2. A parts feeding and tightening method comprising the steps of holding a retractable holding member standing by at the end of a parts feeding passage ready to receive and hold a part conveyed thereto through the parts feeding passage, moving the holding member until the part held thereby becomes coaxial with the retractable feed rod, retracting the holding member and parts feeding passage relative to the feed rod to cause the part to engage an engaging hole in the front end of the feed rod, retracting the holding member, subsequently retracting the holding member and parts feeding passage relative to the feed rod to cause the feed rod holding the part to project, and advancing the whole assembly with the front end of the feed rod held in the projecting state so as to feed the part to an intended place and tighten it.

3. A parts feeding and tightening method comprising the steps of holding a retractable holding member standing by at the end of a parts feeding passage ready to receive and hold a part conveyed thereto through the parts feeding passage, advancing the holding member and parts feeding passage until they are stopped close to an intended place, moving the holding member until the part held thereby becomes coaxial with the retractable feed rod, retracting the holding member and parts feeding passage relative to the feed rod to cause the part to engage an engaging hole in the front end of the feed rod, retracting the holding member, subsequently retracting the holding member and parts feeding passage relative to the feed rod to cause the feed rod holding the part to project, and advancing the whole assembly with the front end of the feed rod held in the projecting state so as to feed the part to the intended place and tighten it.

4. A parts feeding and tightening method as set forth in Claim 1, 2, or 3, wherein the part held by the holding member substantially restrained in the radial direction by an auxiliary member.

5. A parts feeding and tightening apparatus comprising a rotative retractable feed rod having an engaging hole at the front end thereof to receive a part, a parts feeding pipe having a parts feeding passage at its end adjacent the front end of the feed rod, a retractable holding member extending substantially orthogonally to the advancing and retracting axis of the feed rod and capable of advancing and retracting away from said open end, and driving means for retracting the holding member and parts feeding rod relative to the feed rod.

6. A parts feeding and tightening apparatus as set forth in Claim 5, wherein means for holding a part is applied to the front end of the holding member.

7. A parts feeding and tightening apparatus as set forth in Claim 5 or 6, wherein said holding member has a substantially U-shaped groove for receiving a part, while a retractable auxiliary member is attached to the open side of said groove.

FIG.1

FIG.2

FIG.3

FIG.4

FIG.5

FIG.6

FIG.10

FIG.11

FIG.7

FIG.8

FIG.9

**European Patent Office**

# EUROPEAN SEARCH REPORT

Application Number

EP    91 31 1169

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 934 900 (Y. AYOAMA)<br>* column 8, line 28 - line 67; figures 15-19 *<br>--- | 1-7 | B25B23/04<br>B23P19/00 |
| X | US-A-3 985 240 (P. DIXON)<br>* column 12, line 58 - column 13, line 49; figures 1-14 *<br>----- | 1-7 | |
| | | | TECHNICAL FIELDS SEARCHED (Int. Cl.5) |
| | | | B25B<br>B23P |

The present search report has been drawn up for all claims

| Place of search | Date of completion of the search | Examiner |
|---|---|---|
| THE HAGUE | 20 MARCH 1992 | VIBERG S.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)